(19) Europäisches Patentamt
European Patent Office
Office européen des brevets

(11) **EP 3 967 416 A1**

(12) **EUROPEAN PATENT APPLICATION**
published in accordance with Art. 153(4) EPC

(43) Date of publication:
**16.03.2022 Bulletin 2022/11**

(21) Application number: **20806204.2**

(22) Date of filing: **28.04.2020**

(51) International Patent Classification (IPC):
***B08B 3/08*** (2006.01)    ***C11D 7/26*** (2006.01)
***B08B 9/02*** (2006.01)

(52) Cooperative Patent Classification (CPC):
**A01N 43/08; A01N 59/00; B08B 3/08; B08B 9/02;
C02F 1/50; C11D 7/26**

(86) International application number:
**PCT/JP2020/018139**

(87) International publication number:
**WO 2020/230628 (19.11.2020 Gazette 2020/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.05.2019 JP 2019089997**

(71) Applicant: **Kao Corporation
Chuo-ku
Tokyo 103-8210 (JP)**

(72) Inventors:
• **HOSOKAWA Kento
Wakayama-shi, Wakayama 640-8580 (JP)**
• **YAMAMOTO Tetsuji
Wakayama-shi, Wakayama 640-8580 (JP)**
• **TANAKA Takanori
Wakayama-shi, Wakayama 640-8580 (JP)**

(74) Representative: **Hoffmann Eitle
Patent- und Rechtsanwälte PartmbB
Arabellastraße 30
81925 München (DE)**

(54) **METHOD FOR REMOVING BIOFILM**

(57)    The present invention is a method for removing a biofilm formed in a water system comprising, exposing the biofilm to a liquid having a hydroxyl radical generation ability, obtained by a predetermined measurement method, of 0.15 or more.

**Description**

Field of the Invention

The present invention relates to a biofilm removing method for removing a biofilm produced in a water system.

Background of the Invention

A biofilm is also called a microbial film or slime, and generally refers to a structure formed to encapsulate microorganisms such as bacteria or the like in polymeric substances such as polysaccharides, proteins, nucleic acids and the like produced by the microorganisms when the microorganisms adhere to surfaces of substances to grow. The formation of a biofilm causes many kinds of problems due to microorganisms, thus posing problems in various industrial fields. For example, when a biofilm is formed within piping of a food plant, this biofilm peels off to be mixed as a foreign substance into products, to cause the occurrence of food poisoning due to toxins derived from bacteria, or the like. Further, the formation of a biofilm onto metal surfaces causes metal corrosion and accelerates the deterioration of equipment.

Systems utilizing aqueous media, such as cooling systems for plant equipment or buildings using water-cooled cooling towers, cooling pools, or the like have conventionally been used. In such systems, the microbial contamination of water used is problematic. For example, in a cooling system using a water-cooled cooling tower, microorganisms mixed into cooling water form a biofilm inside piping, particularly in a heat exchanger. The biofilm formed in the heat exchanger decreases the efficiency of heat exchange and increases the amount of electricity used in the cooling system. In order to prevent the biofilm from being formed, the periodical replacement and cleaning of water are required, but they increase maintenance costs of the system. While, in equipment, apparatuses or the like using cooling water, such as water-cooled cooling towers or the like, antimicrobial agents or growth inhibitors called slime control agents may sometimes also be added to the cooling water to inhibit a biofilm, treatment using no slime control agents is more desirable from the viewpoint of safety, the corrosion of metal piping, chemical agent costs or the like.

Various kinds of proposals have conventionally been offered as measures against contamination incurred due to microorganisms or the like.

JP-A 2012-512199 discloses that a disinfection/decontamination agent containing vitamin, a metal ion, a surface-active compound and a predetermined antimicrobial active substance can be used for the degradation of biofilms.

JP-A 2016-102227 discloses a method for preventing a biofilm in a cooling water system in which cooling water cooled in a cooling tower is circulated to a heat exchanger and the cooling tower is supplied with supplementary water, wherein water in the cooling water system is treated by removing phosphoric acid in the supplementary water and using a non-phosphoric corrosion inhibitor as a corrosion inhibitor.

JP-A 2016-035009 discloses a biofilm removing agent composition for hard surfaces containing 1 mass% or more and 40 mass% or less of internal olefin sulfonates.

JP-A 2018-168097 discloses a biofilm formation inhibiting composition containing a specific cyclic aldehyde compound and an organic solvent.

JP-A 2017-518432 discloses a method for treating a biofilm-affected surface including the step of contacting the affected surface with a predetermined aqueous alkali surfactant composition having a surfactant hydroxide molarity of from 2 to 9.

Summary of the Invention

The present invention provides a biofilm removing method capable of effectively removing a biofilm formed in a water system, such as an apparatus, equipment or the like including a member coming in contact with water, such as a cooling tower, bathtub piping or the like.

The present invention relates to a method for removing a biofilm formed in a water system including, exposing the biofilm to a liquid having a hydroxyl radical generation ability, obtained by the following method for measuring the amount of hydroxyl radicals, of 0.15 or more.

[Method for measuring the amount of hydroxyl radicals]

To a liquid subjected to the measurement of the amount of hydroxyl radicals, an iron oxide hydroxide and 5,5-dimethyl-1-pyrroline N-oxide (DMPO) are added to have final concentrations of 50 $\mu$M and 5% (volume ratio), respectively, and signal strength values are measured 10 minutes later using an electron spin resonance (ESR) spectrometer. Hydroxyl radicals generated by the reaction are captured by DMPO to form spin adducts. The second and third signal strength values in a spectrum of the spin adducts are averaged and divided by a signal strength value of a Mn marker to relatively determine the amount of the hydroxyl radicals, a value of which is taken as the hydroxyl radical generation ability. The ESR is measured using an ESR spectrometer (ESR-X10SA) manufactured by KEYCOM Corporation and a flat quartz cell (RFIC-7) manufactured by Flash Point Co., Ltd. under the following conditions. As an internal standard, Mn Marker for ESR System Model: MG01 manufactured by KEYCOM Corporation is used with the scale set to 13.5.

- Frequency: 9.50321 GHz
- Reson. MF: 330.3 mT
- Sweep width: 16 mT
- Mod. width: 0.5 mT
- ADC gain: 1
- Amplitude gain: 10
- Sweep time: 30 sec
- Time const: 300 ms
- Average: 1
- MW power: 0
- Moving average: 5
- Multi accumu: 0

Hereinafter, when mention is made of the hydroxyl radical generation ability, it refers to the biofilm generation ability measured by this specific method unless otherwise specified.

According to the present invention, provided is a biofilm removing method capable of effectively removing a biofilm formed in a water system.

Embodiments of the Invention

An effect development mechanism by a biofilm removing method of the present invention is not necessarily thoroughly understood, but is considered as follows. The present inventors have found that a biofilm in a water system can be decomposed or dispersed in water owing to a hydroxyl radical, thereby contributing to the removal of the biofilm from equipment. In terms of the efficiency of the action of the hydroxyl radical and the biofilm formed in the equipment, the efficiency is poor even if the hydroxyl radical is present on the surface of the biofilm, and high biofilm removal efficiency can be expected if the hydroxyl radical can be produced widely inside the biofilm formed in the equipment. The present inventors have found that a higher biofilm removal effect is obtained if a liquid of an atmosphere to which the biofilm is exposed has a hydroxyl radical generation ability of 0.15 or more.

Note that effects of the present invention are not limited to the aforementioned acting mechanism.

The liquid having a hydroxyl radical generation ability of 0.15 or more may be a liquid containing water. The liquid having a hydroxyl radical generation ability of 0.15 or more is not particularly limited, but can be provided, in one mode, as a liquid composition containing

(a) a compound having a hydroxyl radical generation ability (hereinafter also referred to as component (a)),
(b) a reducing agent (hereinafter also referred to as component (b)) and water. The liquid composition preferably further contains (c) a monovalent or divalent organic acid or a salt thereof with a primary dissociation constant (hereinafter referred to as pKa1) of 1.2 or more and 4.6 or less (hereinafter also referred to as component (C)).

The biofilm removing method of the present invention is attained by exposing the biofilm to the liquid having a hydroxyl radical generation ability of 0.15 or more. While a means for attaining the liquid having a hydroxyl radical generation ability of 0.15 or more is not particularly limited as long as such a liquid can be attained, one exemplary mode may be a method for bringing the biofilm into contact with a liquid composition containing component (a), component (b) and water, and further component (c). It has been found that, in a biofilm produced in a water system, metal ions originating for example in materials of equipment or water supplied to the water system are insolubilized to water and accumulated as oxides or the like. It is considered that, as the liquid composition having a hydroxyl radical generation ability of 0.15 or more can utilize especially the metal ions derived from metals accumulated within the biofilm produced in the water system to generate hydroxyl radicals throughout the inside of the biofilm in a more efficient manner, the decomposition or fragmentation of the biofilm is easier to promote.

Incidentally, it is considered that even if a liquid having a hydroxyl radical generation ability of less than 0.15 causes, when exposed to the biofilm, the reaction or decomposition at each reaction point, the distance between the reaction points is so long that interactions therebetween are difficult to occur and the macro decomposition or division of the biofilm is unlikely to occur.

Note that effects of the present invention are not limited to the aforementioned acting mechanism.

[Component (a)]

Component (a) is a compound having a hydroxyl radical generation ability.

Examples of component (a) include a compound generating a hydroxyl radical through a Fenton-like reaction.

Examples of component (a) include one or more compounds selected from hydrogen peroxide, percarbonate salts and organic peracids, and one or more compounds selected from hydrogen peroxide and percarbonate salts are preferable from the viewpoints of availability, economy and the hydroxyl radical generation ability. Examples of the percarbonate salts include alkali metal percarbonate salts such as sodium percarbonate, potassium percarbonate and the like, and sodium percarbonate is preferable from the viewpoints of availability, economy and the hydroxyl radical generation ability.

[Component (b)]

Component (b) is a reducing agent.

Component (b) may be a compound acting as a reducer for metals, for example, iron. Note that metals for which component (b) of the present invention acts as a reducer represent metals in a reducible state.

Examples of component (b) include one or more compounds selected from:

(b-1) compounds with an enediol structure: for example, ascorbic acid or salts thereof, vitamin C extracted from natural products, tannic acid, erythorbic acid or salts thereof;
(b-2) hydroxylamines: for example, N,N-diethylhydroxylamine;
(b-3) phenolic reducing agents: for example, gallic acid, methylhydroquinone, dimethylhydroquinone, trimethylhydroquinone, t-butylhydroquinone, methoxyhydroquinone, chlorohydroquinone; and
(b-4) other reducing agents: ascorbic acid derivatives or salts thereof, hydrosulfites, pyrosulfites, sulfites, hydrogensulfites, thiosulfates, thioureadioxide. Examples of salts of these compounds include salts of alkali metals such as sodium, potassium and the like and alkaline earth metal salts such as calcium salts and the like.

Component (b) is preferably ascorbic acid or salts thereof from the viewpoints of availability and enhancing the effect of removing biofilms (hereinafter also referred to as biofilm removal properties).

[Component (c)]

In the present invention, it is preferable from the viewpoint of further enhancing the effect of removing biofilms that a liquid containing components (a) and (b) be used together with (c) a monovalent or divalent organic acid or a salt thereof with a primary dissociation constant (hereinafter referred to as pKa1) of 1.2 or more and 4.6 or less (component (c)). Of such organic acids or salts thereof, compounds acting as reducers are treated as component (b).

The pKa1 of component (c) is preferably 1.8 or more and more preferably 2.5 or more, and preferably 3.9 or less and more preferably 3.3 or less from the viewpoints of the control of the hydroxyl radical generation ability, and biofilm removal properties.

The molecular weight of the organic acid of component (c) may be, for example, 70 or more, further 75 or more and further 95 or more, and 200 or less, further 180 or less, further 165 or less and further 160 or less from the viewpoints of the control of the hydroxyl radical generation ability, and biofilm removal properties. The organic acid of component (c) has preferably 2 or more and 4 or less carbons from the viewpoint of biofilm removal properties. The organic acid of component (c) is preferably a carboxylic acid and more preferably a monocarboxylic acid or a dicarboxylic acid from the viewpoints of the control of the hydroxyl radical generation ability, and biofilm removal properties.

Examples of component (c) include one or more organic acids or salts thereof selected from hydroxymonocarboxylic acids with 2 or 3 carbons and a molecular weight of 70 or more and 200 or less and further 180 or less, dicarboxylic acids with 3 or 4 carbons and a molecular weight of 70 or more and 200 or less and further 180 or less, hydroxycarboxylic acids with 5 or more and 8 or less carbons and a molecular weight of 70 or more and 200 or less, and salts thereof from the viewpoints of the control of the hydroxyl radical generation ability, and biofilm removal properties.

Examples of the hydroxymonocarboxylic acids with 2 or 3 carbons and a molecular weight of 70 or more and 200 or less include glycolic acid (pKa1: 3.83, Mw:76.1), lactic acid (pKa1: 3.86, Mw: 90.1) and 3-hydroxypropionic acid (pKa1: 4.5, Mw: 90.1).

Examples of the dicarboxylic acids with 3 or 4 carbons and a molecular weight of 70 or more and 200 or less include tartaric acid (pKa1: 2.98, Mw: 150.1), fumaric acid (pKa1: 3.02, Mw: 116.1), maleic acid (pKa1: 1.92, Mw: 116.1), malic acid (pKa1: 3.4, Mw: 134.1), succinic acid (pKa1: 4.19, Mw: 118.1) and malonic acid (pKa1: 2.9, Mw: 104.1).

Examples of the hydroxycarboxylic acids with 5 or more and 8 or less carbons and a molecular weight of 70 or more and 200 or less include gluconic acid (pKa1: 3.86, Mw: 196).

Component (c) is preferably one or more organic acids or salts thereof selected from malonic acid, malic acid, 3-hydroxypropionic acid, succinic acid, lactic acid, tartaric acid, glycolic acid, maleic acid, fumaric acid, gluconic acid and salts thereof from the viewpoints of the control of the hydroxyl radical generation ability, and biofilm removal properties.

Component (c) is more preferably one or more organic acids or salts thereof selected from tartaric acid, fumaric acid, maleic acid, gluconic acid and salts thereof from the viewpoints of the control of the hydroxyl radical generation ability, and biofilm removal properties.

Examples of the salt of the organic acid of component (c) include salts of alkali metals such as sodium, potassium and the like and salts of alkaline earth metals such as calcium and the like.

It is considered that the hydroxyl radical generation ability is improved when an organic acid of a specific structure (component (c)) is used, as component (c) forms complexes with the insolubilized metals or metal ions accumulated, thereby making them more likely to be solubilized to water as metal ions within the biofilm, which accelerates the reduction of the metal ions due to component (b), as well as the generation of hydroxyl radicals from component (a).

[Method for removing biofilm]

In a biofilm removing method of the present invention, a biofilm formed in a water system is exposed to a liquid having a hydroxyl radical generation ability of 0.15 or more. The biofilm removing method of the present invention may be a method for bringing a biofilm formed in a water system into contact with a liquid having a hydroxyl radical generation ability of 0.15 or more. Here, the hydroxyl radical generation ability of the liquid is obtained by the following method for measuring the amount of hydroxyl radicals. The hydroxyl radical generation ability obtained by this method is a relative ESR peak strength of hydroxy radicals ($\cdot$OH) relative to Mn. The liquid having a hydroxyl radical generation ability of 0.15 or more may be either a dispersion or a solution. In the following measuring method, a liquid subjected to the measurement of the amount of hydroxyl radicals may be a liquid containing water. The present invention encompasses a mode in which the liquid having a hydroxyl radical generation ability of 0.15 or more is a liquid containing water and a subject of the measurement of the amount of hydroxyl radicals in the following measuring method is a liquid containing water.

<<Method for measuring the amount of hydroxyl radicals>>

To a liquid subjected to the measurement of the amount of hydroxyl radicals, an iron oxide hydroxide and 5,5-dimethyl-1-pyrroline N-oxide (DMPO) (spin trapping agent) are added to have final concentrations of 50 $\mu$M and 5% (volume ratio), respectively, and signal strength values are measured 10 minutes later using an electron spin resonance (ESR) spectrometer. Hydroxyl radicals generated by the reaction are captured by DMPO to form spin adducts. The second and third signal strength values in a spectrum of the spin adducts are averaged and divided by a signal strength value of a Mn marker to relatively determine the amount of the hydroxyl radicals, a value of which is taken as the hydroxyl radical generation ability. The ESR is measured using an ESR spectrometer (ESR-X10SA) manufactured by KEYCOM Corporation and a flat quartz cell (RFIC-7) manufactured by Flash Point Co., Ltd. under the following conditions. As an internal standard, Mn Marker for ESR System Model: MG01 manufactured by KEYCOM Corporation is used with the scale set to 13.5.

- Frequency: 9.50321 GHz
- Reson. MF: 330.3 mT
- Sweep width: 16 mT
- Mod. width: 0.5 mT
- ADC gain: 1
- Amplitude gain: 10
- Sweep time: 30 sec
- Time const: 300 ms
- Average: 1
- MW power: 0
- Moving average: 5
- Multi accumu: 0

In the present invention, the hydroxyl radical generation ability of the liquid may be an ability to generate a hydroxyl radical through a Fenton-like reaction.

In the present invention, "Fenton-like reactions" can refer to the Fenton reaction and hydroxyl radical generation reactions due to reactions of hydrogen peroxide with metal species other than an iron ion (conveniently referred to as pseudo-Fenton reactions). That is, in the present invention, "Fenton-like reactions" may be a concept encompassing the Fenton reaction caused by an iron ion, and quasi-Fenton reactions, i.e., hydroxyl radical generation reactions caused by metal species other than an iron ion. Pseudo-Fenton reactions may be chemical reactions through which hydroxyl radicals are produced from compounds generating hydroxyl radicals with metal ions other than an iron ion as catalysts.

The Fenton reaction is defined as a chemical reaction through which hydroxyl radicals are produced from hydrogen peroxide with iron(II) as a catalyst.

On the other hand, pseudo-Fenton reactions are reactions caused by using as metal species, metal species known to cause reactions similar to those caused by iron(II), or metal species selected from the transition elements in the fourth period of the periodic table found by the present invention (scandium, titanium, vanadium, chromium, manganese, cobalt, nickel and copper), and using as compounds generating hydroxyl radicals, compounds known to cause reactions similar to those caused by hydrogen peroxide with the metal species, or compounds selected from hydrogen peroxide, percarbonate salts and organic peracids found by the present invention.

The liquid may have a hydroxyl radical generation ability of 0.15 or more, preferably 0.20 or more, more preferably 0.3 or more, further preferably 0.4 or more, furthermore preferably 0.8 or more and furthermore preferably 3.4 or more, and preferably 20 or less, more preferably 15 or less, further preferably 10 or less, further preferably 7 or less and furthermore preferably 6 or less from the viewpoints of biofilm removal properties and preventing materials of equipment from being damaged.

In the present invention, the liquid having a hydroxyl radical generation ability of 0.15 or more can be exposed to a biofilm as a liquid medium, thereby removing the biofilm. Examples of a method for exposing the biofilm to the liquid include, for example, a method for bringing the biofilm into contact therewith by utilizing water flowing, circulating or stagnating in a water system. At that time, external force may be applied. In a portion which cannot directly be touched by hand, such as the inside of plumbing or the like, a biofilm can be removed by using the liquid so as to be exposed to the biofilm by flowing, circulating or the like. Further, in a portion which can directly be touched by hand, such as pools, bathhouses or the like, while it is sufficient to merely expose a biofilm to the liquid, the biofilm can further surely be removed by applying light external force, such as rubbing with a mop, a wiping cloth or the like, etc.

As mentioned above, the hydroxyl radical generation ability of the liquid composition containing components (a) and (b), and further component (c) as necessary, varies depending on the concentrations of components (a) and (b), the ratio of component (a)/component (b), the addition and added amount of component (c), and the like. When the same components are combined, usually, the higher the concentrations of components (a), (b) and further (c) are, the more the generation amount of hydroxyl radicals measured by the aforementioned method exhibits a tendency to increase. In view of this fact, the hydroxyl radical generation ability of the liquid composition can be adjusted.

In the present invention, the liquid to be exposed to a biofilm may be as one example a liquid composition containing component (a), component (b) and water and having a hydroxyl radical generation ability of 0.15 or more. The liquid composition preferably further contains component (C).

From the viewpoints of the control of the hydroxyl radical generation ability, and biofilm removal properties, the concentration of component (a) in the liquid composition can be set by selecting the upper limit and the lower limit, for example, from 50 ppm or more, further 60 ppm or more and further 80 ppm or more, and 5000 ppm or less, further 3000 ppm or less, further 1000 ppm or less, further 600 ppm or less and further 500 ppm or less, and combining them.

From the viewpoints of the control of the hydroxyl radical generation ability, and biofilm removal properties, the concentration of component (b) in the liquid composition can be set by selecting the upper limit and the lower limit, for example, from 50 ppm or more, further 60 ppm or more and further 80 ppm or more, and 50000 ppm or less, further 30000 ppm or less, further 10000 ppm or less, further 5000 ppm or less, further 3000 ppm or less, further 1000 ppm or less, further 600 ppm or less and further 500 ppm or less, and combining them.

If component (c) is used, from the viewpoints of the control of the hydroxyl radical generation ability, and biofilm removal properties, the concentration of component (c) in the liquid composition can be set by selecting the upper limit and the lower limit, for example, from 50 ppm or more, further 60 ppm or more and further 80 ppm or more, and 5000 ppm or less, further 3000 ppm or less, further 1000 ppm or less, further 600 ppm or less and further 500 ppm or less, and combining them.

In the present invention, when the liquid to be exposed to a biofilm contains components (a) and (b), it is preferable from the viewpoints of the control of the hydroxyl radical generation ability, and biofilm removal properties that the mass ratio of component (a) to component (b), component (a)/component (b), be 0.01 or more and further 0.1 or more, and 100 or less, further 10 or less, further 9.5 or less, further 4.5 or less and further 1.5 or less.

When the liquid composition is used, the mass ratio of the concentration of component (a) to that of component (b), (a)/(b), in the composition is preferably 0.01 or more and more preferably 0.1 or more, and preferably 100 or less, more preferably 10 or less, further 9.5 or less, further 4.5 or less and further 1.5 or less from the viewpoints of the control of the hydroxyl radical generation ability, and biofilm removal properties.

In the present invention, when the liquid to be exposed to a biofilm contains components (a) and (c), it is preferable from the viewpoints of the control of the hydroxyl radical generation ability, and biofilm removal properties that the mass ratio of component (a) to component (c), component (a)/component (c), be 0.01 or more and further 0.1 or more, and 100 or less and further 10 or less.

When the liquid composition is used, the mass ratio of the concentration of component (a) to that of component (c), (a)/(c), in the composition is preferably 0.01 or more and more preferably 0.1 or more, and preferably 100 or less and more preferably 10 or less from the viewpoints of the control of the hydroxyl radical generation ability, and biofilm removal properties.

In the present invention, when the liquid to be exposed to a biofilm contains components (b) and (c), it is preferable from the viewpoints of the control of the hydroxyl radical generation ability, and biofilm removal properties that the mass ratio of component (b) to component (c), component (b)/component (c), be 0.01 or more and further 0.1 or more, and 100 or less and further 10 or less.

When the liquid composition is used, the mass ratio of the concentration of component (b) to that of component (c), (b)/(c), in the composition is preferably 0.01 or more and more preferably 0.1 or more, and preferably 100 or less and more preferably 10 or less from the viewpoints of the control of the hydroxyl radical generation ability, and biofilm removal properties.

In the present invention, an excellent biofilm removal effect is exhibited even if the amount of surfactants contained in the liquid to be exposed to a biofilm is small. In the liquid to be exposed to a biofilm, for example, the liquid composition, the concentration of surfactants may be less than 100 ppm, further 50 ppm or less, further 10 ppm or less and further 0 ppm. The liquid to be exposed to a biofilm, for example, the liquid composition, may be substantially free of surfactants. Here, being substantially free of surfactants may mean that the concentration of surfactants falls within the aforementioned range.

In the present invention, the liquid to be exposed to a biofilm may have a pH of 2.0 or more, further 2.5 or more, further 3.0 or more and further 3.5 or more, for example, from the viewpoint of preventing materials of equipment from being damaged, and 10.0 or less, further 8.0 or less, further 7.5 or less and further 6.5 or less from the viewpoints of the control of the hydroxyl radical generation ability, and the effect of removing biofilms. That is, in the present invention, a biofilm can be exposed to a liquid having a pH of 2.0 or more, further 2.5 or more, further 3.0 or more and further 3.5 or more, for example, from the viewpoint of preventing materials of equipment from being damaged, and 10.0 or less, further 8.0 or less, further 7.5 or less and further 6.5 or less.

When the liquid composition is used, the composition may have a pH of 2.0 or more, further 2.5 or more, further 3.0 or more and further 3.5 or more, and 10.0 or less, further 8.0 or less, further 7.5 or less and further 6.5 or less from the same viewpoints.

Water systems to which the present invention is directed are not particularly limited as long as there occurs contact with aqueous liquids in the systems, but refer to, for example, systems that function by flowing or retaining aqueous liquids, and may be apparatuses composed by including members coming in contact with water, such as piping, tanks, pools and the like, installations including the same, and the like. The water may be, in addition to water itself, aqueous media including water and other substances. One example of the water systems is a cooling system provided with a water-cooled cooling tower. In addition, other examples of the water systems may include water flow paths such as plumbing, for example, hot water piping selected from hot water piping of boilers and hot water piping of circulation hot water supply pipes to which hot water is supplied from hot water storage tanks. Moreover, the water systems may include water storage tanks. Further, other examples of the water systems include industrial cooling pools, industrial water supply, water storage or drainage paths, wastewater treatment installations, hot water flow-through heating systems, tanks, pools, bathhouses, filtration installations, paper-making machines in paper mills, tanks and water circulation paths in aquariums, ultra-pure water apparatuses, aquaculture installations, plant factories and the like.

The present invention removes a biofilm formed in a water system. Particularly, the present invention removes a biofilm formed in a portion of a water system coming in contact with water.

The water system to which the present invention is directed is preferably provided with a mechanism in which contact with water occurs, for example, a mechanism for periodically flowing water or a mechanism for circulating water. In that case, the biofilm produced in the water system can be removed by adding components (a) and (b), and component (c) as necessary, of the present invention to water to be brought into contact therewith to produce the liquid having a hydroxyl radical generation ability of 0.15 or more, and operating the water system to bring the water into contact therewith.

The biofilm is exposed to the liquid having a hydroxyl radical generation ability of 0.15 or more, for example, the liquid composition, for a time period of 5 minutes or more and further 10 minutes or more, and 48 hours or less and further 30 hours or less, for example, from the viewpoint of biofilm removal properties. When the liquid composition is used, the contact time of the liquid composition with the biofilm may fall within this range.

In addition, the temperature of the liquid having a hydroxyl radical generation ability of 0.15 or more, for example, the liquid composition, is, for example, 5°C or more and further 10°C or more, and 85°C or less and further 60°C or less from the viewpoint of biofilm removal properties. When the liquid composition is used, the temperature of the liquid composition may fall within this range.

At the time of applying components (a) and (b), and component (c) as necessary, of the present invention to the water system, a composition produced in advance to contain these components at concentrations suitable for the contact may be used, or a composition produced to contain these components at high concentrations may be used by diluting in water. In addition, components (a) and (b), and component (c) as necessary may be used by dissolving in water flowing, circulating or stagnating in the water system separately or after premixed. The pH may be adjusted as necessary. While components (a), (b) and (c) can be supplied in the form of liquids, solids, aqueous solutions or the like depending on compounds, when the liquid composition is used, the composition is preferably produced immediately before applied to the water system from the viewpoint of the liquid stability of the composition. Further, it is also preferable that components (a) and (b), and component (c) as necessary, of the present invention be brought into contact with the biofilm by dissolving in water flowing, circulating or stagnating in the water system.

In the present invention, it has been found that a liquid having a hydroxyl radical generation ability of 0.15 or more is superior in the effect of removing biofilms. This may serve as an indicator for the case where a liquid to be brought into contact with a biofilm is formed, as one mode thereof, by combining components (a) and (b), and optionally component (c).

In addition, a predetermined liquid used in the present invention may function as a biofilm removing agent.

The liquid having a hydroxyl radical generation ability of 0.15 or more used in the present invention may be a liquid not containing or substantially free of metal ions involved in Fenton-like reactions, specifically, ions of metals selected from iron, scandium, titanium, vanadium, chromium, manganese, cobalt, nickel and copper, and further, metal ions. Here, being substantially free of the metal ions may mean a state in which even if the metal ions are contained, the amount thereof is so extremely small that Fenton-like reactions do not sufficiently occur.

The present invention provides as one mode thereof a method for selecting a liquid for use in removal of a biofilm formed in a water system including, mixing with water components (a) and (b), and optionally component (c) to prepare a liquid composition, measuring the hydroxyl radical generation ability of the liquid composition by the aforementioned measuring method, and selecting the measured liquid composition as a liquid to be exposed to the biofilm if the composition has a hydroxyl radical generation ability of 0.15 or more.

The present invention provides as one mode thereof a method for removing a biofilm formed in a water system including, mixing with water components (a) and (b), and optionally component (c) to prepare a liquid composition, measuring the hydroxyl radical generation ability of the liquid composition by the aforementioned measuring method, selecting the measured liquid composition if the composition has a hydroxyl radical generation ability of 0.15 or more, and exposing the biofilm to the liquid selected.

The present invention provides as one mode thereof a method for removing a biofilm formed in a water system including, mixing with water components (a) and (b), and optionally component (c) to prepare a liquid composition, measuring the hydroxyl radical generation ability of the liquid composition by the aforementioned measuring method, selecting the measured liquid composition if the composition has a hydroxyl radical generation ability of 0.15 or more, and bringing the biofilm into contact with the liquid composition selected.

The matters mentioned in the biofilm removing method of the present invention can be appropriately applied to these modes. For example, specific examples or preferable modes of components (a), (b) and (c) in these modes are the same as in the biofilm removing method of the present invention.

Examples

<Examination examples 1 to 12>

As liquids to be exposed to a biofilm formed in a water system, liquid compositions were prepared by using components shown in Table 1 and subjected to the following test. In addition, the hydroxyl radical generation ability of the liquid compositions in Table 1 was measured by the method described herein. The results are shown in Table 1. Note that after the pH of each composition in Table 1 was adjusted by using 10 mM acetate buffer, the concentration of each component was adjusted to a predetermined value. In addition, the balance of each composition in Table 1 is water.

[Biofilm removal test (cooling tower model)]

(1) Production of biofilm

For biofilm production, a water system model was used with an annular reactor (manufactured by Art Kagaku Co., Ltd.) having a culture vessel with a capacity of 100 mL. The culture vessel of the annular reactor was equipped with a cylindrical rotator rotating at a rate of 160 revolutions per minute, and a test piece (SUS304) was attached to this rotator in advance. Cooling water collected from a water-cooled cooling tower for cooling a reaction tank equipment in a chemical plant was supplied to the culture vessel of the annular reactor (maintained at 30°C), and culture was carried out for 3 weeks to form a biofilm on the test piece.

(2) Biofilm removal test

The test piece on which the biofilm was formed was immersed in 5 mL of each liquid composition containing components in Table 1 at concentrations in Table 1 or a control (ultra-pure water) added into each well of a 6-well plate, and shake was carried out at 30°C and 60 rpm for 16 hours. Each test piece was dyed with 0.1% crystal violet and thereafter cleaned with ultra-pure water, and the dye was extracted using 1 mL of ethanol to measure the absorbance (OD570). On the basis of the measured OD570, a biofilm removal rate was measured in accordance with the following formula. Note that a blank represents the OD570 of ethanol.

$$\text{Biofilm removal rate (\%)} = \{(\text{control OD570-blank OD570}) - (\text{OD570 of examination example-blank OD570})\} \times 100 / (\text{control OD570-blank OD570})$$

Note that the larger a value of the biofilm removal rate in the present test is, the higher the effect is, and a difference of 5% in the biofilm removal rate in the present test can be recognized as a significant difference and a difference of 10% as a clearer difference.

[Table 1]

| | | | | Examination example | | | | | | | | | | | |
|---|---|---|---|---|---|---|---|---|---|---|---|---|---|---|---|
| | | | | 1 | 2 | 3 | 4 | 5 | 6 | 7 | 8 | 9 | 10 | 11 | 12 |
| Liquid composition | Concentration (ppm) | (a) | Hydrogen peroxide | 100 | 100 | 100 | 100 | 100 | 100 | 100 | 100 | 100 | 100 | 1000 | 100 |
| | | (b) | Sodium ascorbate | 100 | 100 | 100 | 100 | 100 | 100 | 100 | 100 | 100 | 100 | 1000 | 100 |
| | | (c) | Tartaric acid | 100 | | | | | | | | | | | |
| | | | Malic acid | | 100 | | | | | | | | | | |
| | | | Succinic acid | | | 100 | | | | | | | | | |
| | | | Maleic acid | | | | 100 | | | | | | | | |
| | | | Fumaric acid | | | | | 100 | | | | | | | |
| | | | Malonic acid | | | | | | 100 | | | | | | |
| | | | Glycolic acid | | | | | | | 100 | | | | | |
| | | | Lactic acid | | | | | | | | 100 | | | | |
| | | | 3-hydroxypropionic acid | | | | | | | | | 100 | | | |
| | | | Citric acid | | | | | | | | | | 100 | | |
| | pH (20°C) | | | 4 | 4 | 4 | 4 | 4 | 4 | 4 | 4 | 4 | 4 | 4 | 4 |
| | Hydroxyl radical generation ability | | | 3.70 | 0.31 | 0.97 | 5.16 | 3.87 | 0.21 | 3.20 | 1.15 | 0.49 | 0.13 | 1.5 | 0.18 |
| | Biofilm removal rate (%) | | | 69.2 | 49.4 | 61.2 | 66.5 | 72.8 | 43.7 | 55.7 | 50.5 | 54.8 | 19.7 | 64.5 | 33.8 |

When external force is utilized to remove the biofilm, for example, in such a case that the biofilm is removed by cleaning by rubbing with a mop, a wiping cloth or the like, a biofilm removal rate of 33% or more in this evaluation is sufficient for the development of the effect. When external force is smaller, for example, in the case of removing the biofilm by flow, circulation or the like of the compositions in Table 1, a biofilm removal rate of 40% or more can be sufficient for the removal of the biofilm, and this rate is more preferable.

**Claims**

1.    A method for removing a biofilm formed in a water system comprising, exposing the biofilm to a liquid having a hydroxyl radical generation ability, obtained by the following method for measuring the amount of hydroxyl radicals, of 0.15 or more:

[Method for measuring the amount of hydroxyl radicals]

To a liquid subjected to the measurement of the amount of hydroxyl radicals, an iron oxide hydroxide and 5,5-dimethyl-1-pyrroline N-oxide (DMPO) are added to have final concentrations of 50 $\mu$M and 5% (volume ratio), respectively, and signal strength values are measured 10 minutes later using an electron spin resonance (ESR) spectrometer; hydroxyl radicals generated by the reaction are captured by DMPO to form spin adducts; second and third signal strength values in a spectrum of the spin adducts are averaged and divided by a signal strength value of a Mn marker to relatively determine the amount of the hydroxyl radicals, a value of which is taken as the hydroxyl radical generation ability; the ESR is measured using an ESR spectrometer (ESR-X10SA) manufactured by KEYCOM Corporation and a flat quartz cell (RFIC-7) manufactured by Flash Point Co., Ltd. under the following conditions; and as an internal standard, Mn Marker for ESR System Model: MG01 manufactured by KEYCOM Corporation is used with the scale set to 13.5,

- Frequency: 9.50321 GHz
- Reson. MF: 330.3 mT
- Sweep width: 16 mT
- Mod. width: 0.5 mT
- ADC gain: 1
- Amplitude gain: 10
- Sweep time: 30 sec
- Time const: 300 ms
- Average: 1
- MW power: 0
- Moving average: 5
- Multi accumu: 0.

2. The method for removing a biofilm according to claim 1, wherein the hydroxyl radical generation ability is an ability to generate a hydroxyl radical through a Fenton-like reaction.

3. The method for removing a biofilm according to claim 1 or 2, wherein the biofilm is exposed to the liquid for 5 minutes or more.

4. The method for removing a biofilm according to any one of claims 1 to 3, wherein the water system is a cooling system comprising a water-cooled cooling tower.

5. The method for removing a biofilm according to any one of claims 1 to 4, wherein the water system comprises a water flow path and/or a water storage tank.

**INTERNATIONAL SEARCH REPORT**

| International application No. |
| --- |
| PCT/JP2020/018139 |

**A. CLASSIFICATION OF SUBJECT MATTER**
B08B 3/0S(2006.01)i; C11D 7/26(2006.01)i; B08B 9/02(2006.01)i
FI: B08B3/08 Z; C11D7/26; B08B9/02

According to International Patent Classification (IPC) or to both national classification and IPC

**B. FIELDS SEARCHED**

Minimum documentation searched (classification system followed by classification symbols)
B08B3/08; C11D7 /26; B08B9/02

| Documentation searched other than minimum documentation to the extent that such documents are included in the fields searched | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | 1WO 2015/125739 A1 (KURABO INDUSTRIES LTD.) 27.08.2015 (2015-08-27) paragraphs [0024]-[0072], fig. 1-4 | 1, 3, 5 |
| X | US 2017/0107128 A1 (CLEAN CHEMISTRY, INC.) 20.04.2017 (2017-04-20) paragraphs [0007]-[0045], [0077]-[O 113], [0320]-[0326], fig. 1-4 | 1-5 |
| X | JP 2013-139953 A (DAIKIN INDUSTRIES, LTD.) 18.07.2013 (2013-07-18) paragraphs [0034]-[0107], fig. 1-12 | 1-5 |
| A | JP 2005-323561 A (ORGANO CORP.) 24.11.2005 (2005-11-24) paragraphs [0022]-[0031] | 1-5 |
| A | WO 2010/140581 A1 (KURABO INDUSTRIES LTD.) 09.12.2010 (2010-12-09) entire text, all drawings | 1-5 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 15 July 2020 (15.07.2020) | 28 July 2020 (28.07.2020) |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

**INTERNATIONAL SEARCH REPORT**
Information on patent family members

International application no.

PCT/JP2020/018139

| Patent Documents referred in the Report | Publication Date | Patent Family | Publication Date |
|---|---|---|---|
| WO 2015/125739 A1 | 27 Aug. 2015 | TW 201536692 A fig. 1-4 | |
| US 2017/0107128 A1 | 20 Apr. 2017 | WO 2014/039929 A1 fig. 1-4 | |
| JP 2013-139953 A | 18 Jul. 2013 | (Family: none) | |
| JP 2005-323561 A | 24 Nov. 2005 | (Family: none) | |
| WO 2010/140581 A1 | 09 Dec. 2010 | US 2012/0094887 A1 entire text, all drawings | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012512199 A
- JP 2016102227 A
- JP 2016035009 A
- JP 2018168097 A
- JP 2017518432 A